# EUROPEAN PATENT APPLICATION

(11) **EP 2 071 843 A1**
(43) Date of publication of application: **17.06.2009**
(21) Application number: 07291510.1
(22) Date of filing: 12.12.2007
(51) Int. Cl.: H04N 7/173, H04N 5/00

(54) **Internet protocol television channel selection device**

(71) Applicant: Alcatel Lucent, 75008 Paris (FR)
(72) Inventor: Huysegems, Rafaël, 2800 Walem (BE); Tsang, Ing-Jyh, 9250 Waasmunster (BE); Verzijp, Nico Victor, 2018 Antwerp (BE); Six, Erwin Alfons Constant, 9270 Kalken (BE); Dequeker, Hans Maurice Felix Corneel, 3020 Herent (BE); Hoet, Jeroen, 2500 Lier (BE); Gilon, Edith Béatrice Louise M.B., 1030 Bruxelles (BE); Boucque, Steven Gerard, 8630 Veurne (BE)
(74) Representative: Narmon, Gisèle Marie Thérèse

(57) **Abstract**

The present invention relates to an IPTV Channel selection device, for use in an IPTV system said IPTV system comprising a meta-information holding part that is adapted to store meta-information on each channel of a plurality of IPTV channels, wherein the IPTV Channel selection device comprises a selection engine that is adapted to select at least one IPTV channel from said plurality of IPTV channels based on meta-information on each channel of said plurality of IPTV channels in combination with at least one user-related selection criterion.

## Description

The present invention relates to an Internet Protocol Television channel selection device as described in the preamble of claim 1.

Such a device is well known in the art from current Internet protocol Television systems, further referred to as an IPTV system, wherein a user is able to manually select a channel from a plurality of IPTV channels. This selection may be dealt with by just sequentially zapping through each of the channels till a channel is found with content that is interesting for the user. An analysis of the behavior of broadcast-TV viewers indicates that the average household zaps every 3 minutes and 42 seconds to find a channel with content which is interesting. This high zapping rate requires a lot of processing power for 'fast channel change' devices in the network and additional bandwidth that needs to be available in the IPTV network.

An improvement of this situation can be found in the reduction of the number of zaps probably obtainable through the use of channel-mosaic that provides a quick overview by combining a number of individual channels with corresponding content into one picture. Using the mosaic, the user can decide with less zaps in comparison to the sequential zapping through the plurality of channels, which channel has his preference. However, the use of channel-mosaic still has disadvantages. A single screen of the mosaic may only contain about 25 channels which renders the solution not scaleable with 200 or more IPTV channels.

Hence, only a small amount of unnecessary zaps can be prevented through the provisioning of a channel mosaic. The reduction of the zapping-load on the network components is still minor.

An object of the present invention is to provide an Internet Protocol Television channel selection device of the above known type but wherein the number of zaps, required for finding content that is interesting for the user, is reduced significantly.

According to the invention, this object is achieved by the device as described in claim 1.

Indeed, this object is achieved by selecting at least one IPTV channel from the plurality of IPTV channels through using the meta-information corresponding to each channel together with at least one user related selection criterion.

By matching the meta-information corresponding to each of the channels with the at least one user related selection criterion, one or more channels with content that is interesting for the user can be selected and subsequently be presented to the user or automatically selected for that user

A further characteristic feature of the present invention is described in claim 2.

In case the at least one user related selection criterion is a set of user preferences of a user of the IPTV system, the selecting of the at least one channel from the plurality of IPTV channels through using the meta-information corresponding to each channel together with a set of user preferences of a user of said IPTV system can be done by selecting the at least one channel which meta-information that best suits to the set of user preferences of the user.

Another further characteristic feature of the present invention is described in claim 3.

In case the at least one user related selection criterion is a set of user preferences of a user of the IPTV system and at least one additional user related rule, the selecting of at least one channel from the plurality of IPTV channels through using the meta-information corresponding to each channel together with the set of user preferences of a user of the IPTV system can be done by selecting the at least one channel which meta-information best suits to the set of user preferences of the user and at the same time taking into account the at least one user related rule. Such a user related rule may be a time dependent rule wherein time-aspects can be used in the decision-making. An Example of such a rule is : "interrupt any program for the 8 o'clock news", "after 11 PM, it is too late to start watching a movie" or "from 6 to 7 PM, there is a preference for cartoons" (as the children are watching).

Still another advantageous feature of the present invention is described in claim 4.

In case the at least one user related selection criterion is a user related rule the selecting of at least one channel from the plurality of IPTV channels through using the meta-information corresponding to each channel together with the at least one user related rule, such as a time dependent rule wherein time-aspects can be used in the decision-making. An Example of such a rule is : "interrupt any program for the 8 o'clock news", "after 11 PM, it is too late to start watching a movie" or "from 6 to 7 PM, there is a preference for cartoons" (as the children are watching).
Using such a user related rule a selection of at least one channel can be made by selecting the at least one channel which meta-information best suits to the at least one user related rule.

A further characteristic feature of the present invention is described in claim 5.

By additionally providing the Internet Protocol Television channel selection device with an learning engine that is adapted to determine the user preferences of a user of the IPTV system based on channel zapping choices of this user in combination with meta-information on each channel of said plurality of IPTV channels and the learning engine additionally being adapted to update the set of user preferences maintained by said user preferences holding part with said user preferences of said user the selecting of at least one channel can be performed even more accurate based on the past and current behavior of the user and dedicated to users current interests.

Still a further characteristic feature of the present invention is described in claim 6.

The IPTV Channel selection device further comprises a selected channel provisioning part that is adapted to provision the IPTV system with said at least one IPTV channel selected from said plurality of IPTV channels. The channel provisioning part may at receipt of a trigger signal provision a first of the at least one channel to the instant channel change server of such an IPTV system. At a second trigger signal an eventual second most preferred channel of the at least one IPTV channel selected from the plurality of IPTV channels.

Another characteristic feature of the present invention is described in claim 7.

The meta-information used in said IPTV Channel selection device adapted to obtain said meta-information from an Electronic Program Guide of said an IPTV system.

Another characteristic feature of the present invention is described in claim 8.

The meta-information used in said IPTV Channel selection device is adapted to obtain said meta-information from a website.

In computer based video systems such meta-information may be obtained from a website.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

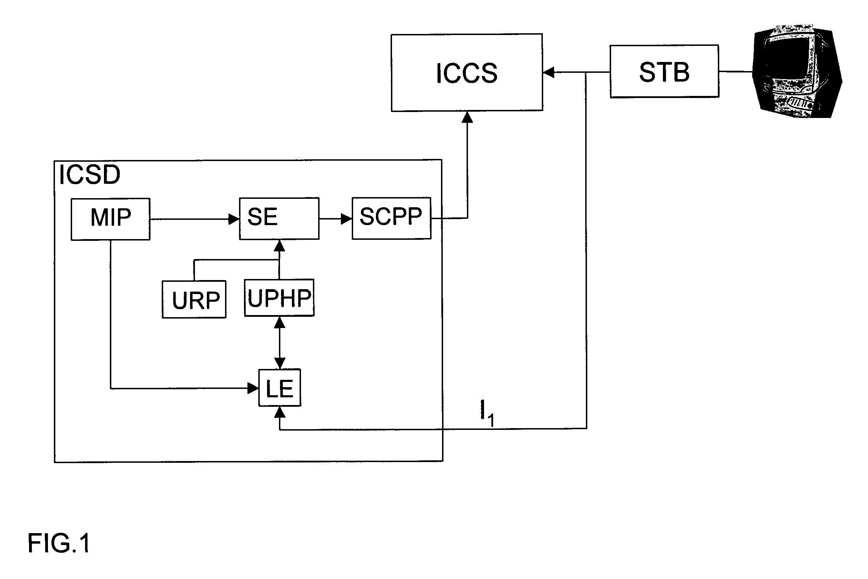

Fig. 1 represents an IPTV Channel selection device of the present invention.

In the following paragraphs, referring to the drawing, an IPTV Channel selection device will be described wherein an implementation of the method according to the present invention is executed.

In the first paragraph the elements of the network in the figure are described, in the second paragraph, the interconnections between all before described Network elements are defined and in a later paragraph the actual execution of the an IPTV Channel selection device and related method will be described.

First the IPTV system of the present invention comprises an Instant channel changing server ICCS, that receives the channel changing signal, including a channel identification as a channel number of the user and in response initiates the channel change within the IPTV system.

The Instant channel changing server ICCS may be located at the operator premises

Additionally the IPTV system comprises a set-top box STB for provisioning the user access to the IPTV system. A television set is being coupled to this set-top box STB for viewing content presented through the IPTV system.

Further the IPTV system of the present invention comprises the IPTV Channel selection device ICSD that is adapted to determine and present at least one channel from a plurality of channels, where the content of the at least one channel meets the interest of the user currently watching television.

Such an IPTV Channel selection device ICSD may be implemented within the access node of the access network such as a Digital subscriber line access network coupling a set-top box of the user to the IPTV system.

Alternatively such IPTV Channel selection device ICSD may be integrated in the set-top box of the user of the IPTV system.

The IPTV Channel selection device ICSD in turn comprises a selection engine SE that is adapted to select at least one IPTV channel from a plurality of IPTV channels based on the meta-information on each channel of a plurality of IPTV channels in combination with at least one user-related selection criterion. The one user-related selection may be a set of user preferences of a user of said IPTV system, set of user preferences of a user of said IPTV system further combined with at least one user related rule, or even may be at least one user related rule. The set of user preferences of a user of said IPTV system is maintained in the user preferences holding part UPHP, the at least one user related rule is maintained in the User Rule maintaining Part URP.

The user IPTV Channel selection device additionally comprises a learning engine LE able to determine user preferences of the user of the IPTV system based on channel zapping/choices of the user in combination with meta-information on each channel of the plurality of IPTV channels and subsequently the learning engine LE is able to update the set of user preferences maintained by said user preferences holding part UPHP with the user preferences of said user determined by the learning engine.

Finally the IPTV Channel selection device comprises an meta-information holding part MIP that is adapted to maintain and keep track of meta-information related to each channel of the possible plurality of channels of the IPTV system. An implementation of such a meta-information holding part MIP may be the electronic program guide of an IPTV system, which is further referred to as EPG. An alternative embodiment of the meta-information holding part MIP may be a website, made available by the IPTV provider that contains the same meta information

The IPTV Channel selection device ICSD further comprises a selected channel provisioning part SCPP that is able to provision the IPTV system with the at least one IPTV channel selected from the plurality of IPTV channels.

The set-top box STB is coupled to the television set and further coupled over an access network such as an ADSL access network or a cable TV network and through the public or dedicated IP network coupled to the Instant channel changing server ICCS.

The IPTV Channel selection device ICSD is coupled with an output to the Instant channel changing server ICCS and with an input to the set-top box.. The output however can be immediately directed to the ICCS (under the form of a user-zap, but not coming from the user)

The output of the IPTV Channel selection device ICSD alternatively could be coupled to the set-top box STB. The set-top box then will perform the required zapping-actions on its own behalf.

In case the IPTV Channel selection device ICSD is coupled with an output to the Instant channel changing server ICCS the output of the the IPTV Channel selection device ICSD is a generated zap but not coming from the user.

The selection engine SE is coupled with an output to an input of the selected channel provisioning part SCPP that in turn is coupled with an output to an input of the Instant channel changing server ICCS. The selection engine SE further is coupled with a first input to an output of the user preferences holding part UPHP, with a second input to an output of the User Rule maintaining Part URP and with a third input being coupled to a first output of the meta-information holding part MIP. The learning engine LE is coupled with an first output to an input of the user preferences holding part UPHP and additionally being coupled with a first input to a second output of the meta-information holding part MIP. (The learning engine LE is also able to read the UPHP to detect e.g. conflicts with an existing rule when learning a new rule. Additionally, the learning engine is coupled with a second input to an input I1 of the IPTV Channel selection device ISCD.

Input I1 serves as an input for intercepting channel selection signals of the user of the IPTV system for selecting a certain channel with corresponding content.

In order to explain the present invention it is assumed that the User profile holding part UPHP contains a set of preferences of the user with respect to the content of television. Examples of such preferences are the spoken or subtitle language corresponding to the content, preferred type of content, favorite programs of the user, the favorite movie director of the user etc.

The selection engine SE does the selection of at least one I PTV channel from the plurality of IPTV channels based on the meta-information on each channel of said plurality of IPTV channels in combination with at least one user-related selection criterion. The selecting engine SE for instance matches the meta-information corresponding to each of the IPTV channels with the user preferences, for instance by only selecting the English spoken channels or English subtitled channels, or by only selecting romantic and comic movies if the user respectively prefers to watch only English spoken content or romantic movies and comic movies. This process may be a continuously ongoing process as the channel content also changes in time.

Additionally such a selection may be based on at least one user-related selection criterion further comprises at least one user related rule. Such rule may be a time dependent rule wherein time-aspects can be used in the decision-making. An Example of such a rule is : "interrupt any program for the 8 o'clock news", "after 11 PM, it is too late to start watching a movie" or "from 6 to 7 PM, there is a preference for cartoons" (as the children are watching).

Alternatively only such rules as maintained in the user rules holding part URP can be applied by the selection engine for selecting at least one IPTV channel from the plurality of IPTV channels.

Such user related rules or user related preferences may be manually configured in the IPTV Channel selection device ICSD.

In this way at least one channel from the plurality of IPTV channels is selected the English spoken or subtitled channels or the channels with content being romantic movie and comic movies, where the at least one channel can be proposed to the user by means of the selected channel provisioning part SCPP that is able to provision the instant channel change server of the IPTV system with the at least one IPTV channel selected from the plurality of IPTV channels, in this case the English spoken or subtitled channels or the channels with content being romantic movie and comic movies.

The IPTV Channel selection device ICSD will permanently reevaluate new opportunities for better matching content. When the viewer is not anymore tuned to the best available content at that moment, an indication could be given to draw his attention. The viewer can then push a triggering button or select a menu-item (not shown) to zap to the new best matching channel. By e.g. pressing the button twice within a short time or by using another button or menu-item,, the next best channel is displayed. In this way, the viewer can walk through all channels, sorted on preference.

In order to explain the execution of an additional advantageous feature of the present invention it is assumed that a certain user of the IPTV system is looking for content that is interesting for him and as a consequence he uses his remote control for subsequently zapping through the plurality of channels of the IPTV system that are offered by the provider of the IPTV channels. These channel change signals include a channel reference such as a channel number or a multicast source IP/port

This channel reference is forwarded through the set-top box to the Instant channel changing server that actually initiates the channel change in the IPTV system where the user in fact through signaling messaging is subscribed to a certain other broadcast /multicast tree of subscribers receiving content corresponding to this certain channel.

In the mean time the IPTV channel selecting device ICSD intercepts these channel change signals via input I1. The learning engine observes these intercepted channel change signals and is adapted to determine the user preferences of the user of the IPTV system based on the observed channel choices of the user in combination with meta-information on each channel that is selected by the user. The meta-information here is obtained from the Electronic program guide of the IPTV system. As a consequence, in time the learning engine may determine a repeatedly choice of a certain channel in time, for instance same channel same time everyday.....

The leaning engine will trace the content that is searched and watched by the user and will store the characteristics of these programs as a number of parameters. Besides time and day, this will be parameters that are retrieved from the meta-info such as language, subtitle-language, type of content (news, film, soap, documentary, sport, cartoon, advertising, ...), name of the program, presenter/ actors, director, movie-genre (action, comedy, thriller, ...) The LE could then apply statistical analysis, artificial intelligence, or whatever form of processing to extract certain patterns/profiles out of this raw data. If also time and date information was stored, these pattern- and profile-rules could be made depending on the time and day. Also other information sources such as the "type of zap-away programs" (Parameters of the programs that make the user zap away when they follow interesting content) could be applied in the analysis. (e.g. Each time after the news, when the sport-news starts, the user zaps away)

On top of the automatic learning capabilities, the user could have the possibility to manually browse through the current rules and make modifications to the existing rules, or even add completely new rules.

The learning engine LE additionally is adapted to update said set of user preferences maintained by said user preferences holding part UPHP with the new learned user preferences of the user.

Based on these preferences it is even possible to make a more accurate selection of channels in order to even better match the interest of the user.

In addition the IPTV channel selection device may also use similar user-profiles in a preferences-database. The channels watched by similar user-profiles could also be taken into account for the selection of the most wanted channel of the user.

It is to be noted that instead of a single user also a one or more users of a group of users is present before the television, for instance the members of a family where children watch TV in the afternoon and father and mother may watch in the evening. These preferences of those different users over the day may result in a kind of aggregated set of user preferences.

Additionally, it is also possible that the users would identify themselves while watching TV. (using e.g. a button on the remote control). This would make it possible to maintain a real user-preference per physical user in the household and to combine the user-preferences when multiple users are watching at the same time.

Although this embodiment of our present invention is described for an IPTV system, the present invention is not resticted to this embodiment but may alternatively be implemented in video systems using a PC such as "Joost" or "YouTube".

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. IPTV Channel selection device, for use in an IPTV system said IPTV system comprising a meta-information holding part adapted to store meta-information on each channel of a plurality of IPTV channels, **CHARACTERIZED IN THAT** said IPTV Channel selection device comprises a selection engine (SE), adapted to select at least one IPTV channel from said plurality of IPTV channels based on said meta-information on each channel of said plurality of IPTV channels in combination with at least one user-related selection criterion.

2. IPTV Channel selection device, according to claim 1, **CHARACTERIZED IN THAT in that** said at least one user-related selection criterion is a set of user preferences of a user of said IPTV system; and **in that** said IPTV Channel selection device further comprises a user preferences holding part (UPHP), adapted to maintain said set of user-preferences of said user.

3. IPTV Channel selection device, according to claim 2 **CHARACTERIZED IN THAT** said at least one user-related selection criterion further comprises at least one user related rule.

4. IPTV Channel selection device, according to claim 1, **CHARACTERIZED IN THAT** said at least one user-related selection criterion is at least one user related rule.

5. IPTV Channel selection device, according any of claims 2 and 3, **CHARACTERIZED IN THAT** said user IPTV Channel selection device further comprises a learning engine (LE), adapted to determine user preferences of said user of said IPTV system based on channel zapping/choices of said user in combination with meta-information on each channel of said plurality of IPTV channels and said learning engine (LE) additionally being adapted to update said set of user preferences maintained by said user preferences holding part (PRHP) with said user preferences of said user.

6. IPTV Channel selection device, according any of claims 1 to 5, **CHARACTERIZED IN THAT** said user IPTV Channel selection device further comprises a selected channel provisioning part (SCPP), adapted to provision said IPTV system with said at least one IPTV channel selected from said plurality of IPTV channels.

7. IPTV Channel selection device, according any of claims 1 to 4, **CHARACTERIZED IN THAT** said. IPTV Channel selection device is adapted to obtain said meta-information from an electronic Program Guide of said an IPTV system.

8. IPTV Channel selection device, according any of claims 1 to 4, **CHARACTERIZED IN THAT** said IPTV Channel selection device is adapted to obtain said meta-information from a website.
